Europäisches Patentamt

European Patent Office

Office européen des brevets

(19)

(11) **EP 1 041 314 B1**

(12) **FASCICULE DE BREVET EUROPEEN**

(45) Date de publication et mention
de la délivrance du brevet:
**23.07.2003   Bulletin 2003/30**

(51) Int Cl.⁷: **F16H 59/66**

(21) Numéro de dépôt: **00400921.3**

(22) Date de dépôt: **03.04.2000**

(54) **Procédé d'adaptation automatique d'une boîte de vitesses à une situation de descente**

Verfahren zur automatischen Auswahl einer Getriebe-Schaltstrategie beim Bergabfahren

Process for automatic determination of a transmission shift strategie during coasting

(84) Etats contractants désignés:
**BE DE ES**

(30) Priorité: **02.04.1999   FR 9904162**

(43) Date de publication de la demande:
**04.10.2000   Bulletin 2000/40**

(73) Titulaire: **Renault s.a.s.**
**92100 Boulogne Billancourt (FR)**

(72) Inventeurs:
 • **Taffin, Christian**
  **92380 Garches (FR)**

 • **Arbona, Jean-Pierre**
  **78630 Bures-Morainvilliers (FR)**

(56) Documents cités:
  EP-A- 0 638 742          DE-A- 19 708 528
  FR-A- 2 737 760

 • "TRANSMISSION'S FUZZY LOGIC KEEPS YOU
  ON TRACK" EDN ELECTRICAL DESIGN
  NEWS,US,CAHNERS PUBLISHING CO.
  NEWTON, MASSACHUSETTS, vol. 38, no. 26,
  page 60-61,63 XP000424647 ISSN: 0012-7515

EP 1 041 314 B1

**Description**

La présente invention se rapporte à la commande des boîtes de vitesses de véhicule.

Plus précisément, elle concerne un procédé d'adaptation automatique à une situation de descente, d'une boîte de vitesses de véhicule, dont les changements de rapports sont régis par au moins une première loi de passage en situation de roulage normal.

Ce procédé est applicable aussi bien sur une boîte de vitesses automatique à train épicycloïdal, que sur une boîte de vitesses mécanique robotisée, ou sur un variateur (transmission continûment variable).

Lorsqu'une transmission automatique ou «automatisée» dispose de lois plusieurs lois de passages des vitesses, entre lesquelles son calculateur peut commuter, sans intervention du conducteur, en fonction des conditions de roulage du véhicule, et/ou du comportement du conducteur, on parle habituellement de lois de passage « auto-adaptatives », ce qui signifie que les lois de passage de la boîte ne sont pas figées, mais s'adaptent automatiquement aux conditions de roulage et/ou de conduite du véhicule.

Avec des lois « auto-adaptatives » classiques, le roulage du véhicule en descente, qui est généralement détecté par le repos de l'accélérateur, est interprété par le calculateur de la transmission comme un comportement « non sportif» du conducteur, du fait que celui-ci ne sollicite pas l'accélérateur. Pour cette raison, le calculateur privilégie normalement en descente des lois de passages de type « éco », où les courbes de passage des vitesses sont décalées vers les faibles régimes pour minimiser la consommation de carburant, au détriment du frein moteur.

Ce type de stratégie, qui a pour effet de réduire le frein moteur en descente, alors même qu'il serait souhaitable de l'augmenter, est donc mal adaptée aux situations de descente.

Selon une disposition connue, illustrée notamment par la publication EP 0 638 742 , montrant un procédé selon le preambale de la revendication 1; le calcul de la pente d'une route s'effectue à partir de la différence entre une « accélération nominale » du véhicule, déterminée sur la base de la masse nominale du véhicule sans pente, et une « accélération mesurée », obtenue en dérivant la vitesse du véhicule.

En l'absence de mesure particulière, le freinage du véhicule rend toutefois impossible l'appréciation de cette différence, de sorte que le calcul de la pente de la route selon la méthode indiquée ci-dessus devient inopérant dès que le conducteur freine, et qu'il est impossible d' « adapter » correctement les lois de passage aux situations de descente.

La présente invention vise à identifier les situations de grande descente, même lorsque le conducteur freine, et à procurer automatiquement du frein moteur au véhicule dans de telles situations.

Elle propose dans ce but d'estimer la pente de la route en l'absence de freinage, et en situation de freinage lorsque la vitesse du véhicule est stabilisée, et d'adopter ou non, en fonction de cette estimation, une seconde loi de passage spécifique à la situation de descente, qui procure du frein moteur.

La pente de la route peut notamment être estimée à partir d'une détermination de l'effort résistant du véhicule tenant compte du temps de freinage.

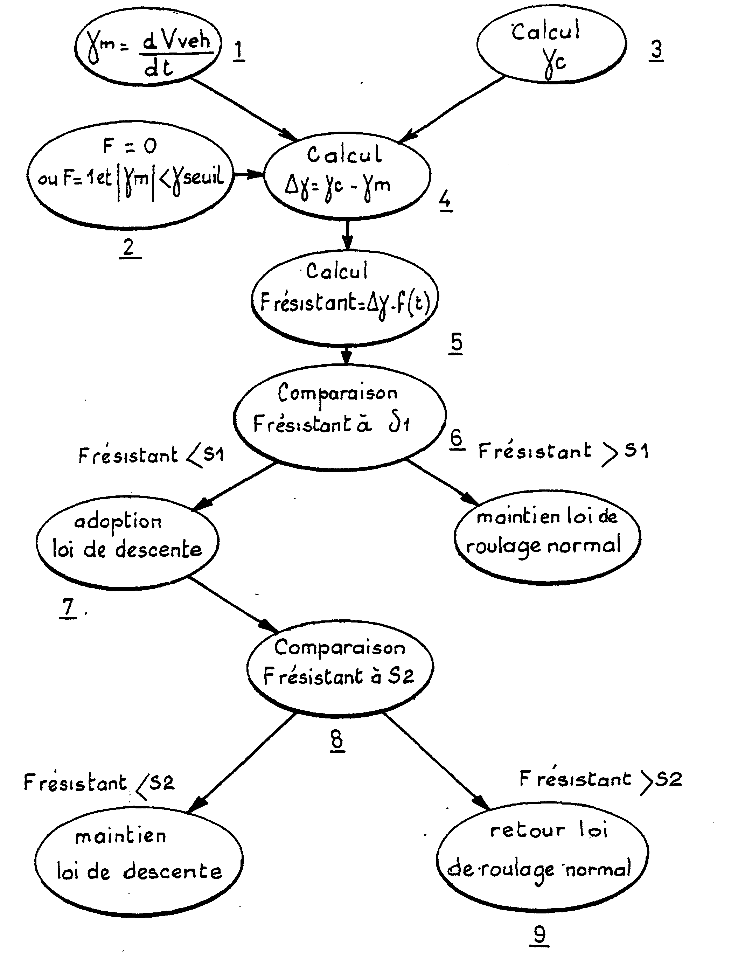

D'autres caractéristiques et avantages de la présente invention apparaîtront clairement à la lecture de la description suivante d'un mode de réalisation particulier de celle-ci, en liaison avec le dessin annexé, dont la figure unique résume les principales étapes de sa stratégie.

Cette stratégie exploite des informations fournies par les capteurs embarqués suivants :

- un capteur de vitesse de déplacement $V_{veh}$ du véhicule,
- un capteur de rapport engagé de la transmission,
- un capteur de charge moteur (mesure du couple moteur ou de l'ouverture papillon), et
- un capteur d'état des freins (0 ou 1).

De façon classique, la pente de la route $\alpha$ est estimée à partir d'un calcul de l'effort résistant $F_{résistant}$ du véhicule. Toutefois, les mesures proposées visent à disposer d'une estimation suffisamment fiable de cette pente, non seulement en l'absence de freinage, mais également en situation de freinage, lorsque la vitesse du véhicule $V_{veh}$ est stabilisée, cette dernière situation étant détectée lorsque l'accélération mesurée $\gamma_m$ du véhicule, obtenue par dérivation de $V_{veh}$ est nulle. La stratégie adoptée consiste en effet à considérer que, si $V_{veh}$ est constante alors que les freins sont activés, les freins sont utilisés, non pas pour ralentir, mais uniquement pour empêcher le véhicule de s'emballer, donc que le véhicule est en descente.

L'effort résistant est estimé à partir de la différence entre une valeur d'accélération calculée $\gamma_c$ du véhicule et une valeur d'accélération mesurée en permanence $\gamma_m$ ( cf étape 1). Conformément à l'invention, la différence $\Delta\gamma = \gamma_c - \gamma_m$ est calculée lorsque les freins ne sont pas activés (F = 0), ou lorsque les freins sont activés (F = 1), l'accélération mesurée est nulle ($|\gamma_m| < \gamma_{seuil}$), et $\Delta_\gamma$ est décroissante (cf étape 2). Dans tous les autres cas, la différence $\Delta_\gamma$ n'est plus calculée, et reste figée à son ancienne valeur. Le calcul de $\gamma_c$ (étape 3) peut notamment s'effectuer selon la méthode connue indiquée ci-dessous, sans toutefois aucun caractère d'obligation :

$$\gamma_c = rap(N).C_{moteur} / Rayon.Masse - \tfrac{1}{2} \rho . Scx.V_{veh}^{2} / Masse.g.k_r$$

$$- dV_{veh}/dt,$$

expression dans laquelle :

- rap (N) est le rapport de démultiplication rapporté à la roue sur le rapport N,
- $C_{moteur}$ est le couple moteur introduit directement ou calculé en fonction par exemple de l'angle papillon et du régime moteur, $\alpha_{pap}$ et $N_{moteur,}$
- Rayon est le rayon de la roue,
- Masse est la masse à vide du véhicule avec deux personnes à bord,
- $\rho$ est la densité de l'air,
- Scx est le coefficient de pénétration dans l'air du véhicule,
- g est la pesanteur (g = 9,81 m/s2), et
- $k_r$ est la résistance au roulement.

Comme indiqué ci-dessus, le calcul de $\Delta_\gamma$ (étape 4) est effectué lorsque les conditions de l'étape 2 sont remplies.

En situation de freinage, l'effort résistant $F_{résistant}$ est toutefois minoré par un terme correcteur, fonction du temps de freinage t (étape 5), de sorte que :

$$F_{résistant} = \Delta_\gamma - f(t),$$

f(t) étant nul en l'absence de freinage, et croissant en fonction du temps de freinage. Etant donné que $F_{résistant}$ étant lié à la pente de la route $\alpha$ par la relation :

$$F_{résistant} = Masse.g.\alpha,$$

la valeur de la pente $\alpha$ se déduit directement de $F_{résistant}$.

Sur la base de ces calculs, l'invention propose de détecter les descentes en comparant $F_{résistant}$ à des seuils d'entrée et de sortie appropriés, et d'adopter ou d'abandonner une loi de passage de vitesses spécifique des situations de descente, procurant du frein moteur, selon le résultat de ces comparaisons.

$F_{résistant}$ est donc comparé à un premier seuil ou seuil d'entrée Si (étape 6), qui est fonction du temps de freinage, et à un second seuil, ou seuil de sortie S2 (étape 8), supérieur à S1, qui est indépendant du temps de freinage.

Conformément à l'invention, la loi de passage spécifique des situations de descente est adoptée dès que $F_{résistant}$ est inférieur au premier seuil S1 (étape 7), et cette même loi est abandonnée dès que $F_{résistant}$ devient supérieur au second seuil S2 (étape 9).

Le fait de calculer le différentiel d'accélération $\Delta\gamma$ aussi bien en l'absence de freinage que dans les situations de freinage où l'accélération mesurée est nulle, en minorant dans ce second cas valeur de $F_{résistant}$ par un terme correcteur fonction du temps f(t), permet de disposer d'une estimation de la pente de la route qui reste suffisamment fiable lors du freinage en forte descente.

L'invention permet donc d'adopter une loi de passage spécifique des situations de forte descente sur la base d'une estimation de la pente de la route qui s'affranchit du freinage du véhicule, et d'abandonner cette loi spécifique avec la même fiabilité concernant la disparition de la déclivité. Comme indiqué plus haut, la stratégie proposée trouve sa place dans un calculateur de transmission automatique ou automatisée capable de commuter entre différentes lois de passage automatique des vitesses, selon des critères liés aux conditions de déplacement et de conduite du véhicule.

**Revendications**

1. Procédé d'adaptation automatique à une situation de descente, d'une boîte de vitesses de véhicule, dont les changements de rapports sont régis par au moins une première loi de passage en situation de roulage normal et une seconde loi de passage spécifique à la situation de descente qui procure du frein moteur, ce procédé comportant des étapes consistant à estimer la pente de la route à partir d'un calcul de l'effort résistant et à adopter ou non en fonction de cette estimation la seconde loi de passage, **caractérisé en ce que** l'effort résistant est estimé en calculant la différence ($\Delta\gamma$) entre une valeur d'accélération calculée ($\gamma_c$) du véhicule et une valeur d'accélération mesurée ($\gamma_m$) lorsque les freins ne sont pas activés ou lorsque les freins sont activés et l'accélération mesurée ($\gamma_m$) est nulle, et en figeant la valeur de cette différence dans tous les autres cas.

2. Procédé d'adaptation selon la revendication 1, **caractérisé en ce que** l'estimation de l'effort résistant du véhicule tient compte du temps de freinage (t)

3. Procédé d'adaptation selon la revendication 2, **caractérisé en ce que** la seconde loi de passage est adoptée lorsque l'effort résistant ($F_{résistant}$) est inférieur à un premier seuil (S1).

4. Procédé d'adaptation selon la revendication 3, **caractérisé en ce que** le premier seuil (Si) est fonction du temps de freinage (t).

5. Procédé d'adaptation selon la revendication 2, 3 ou 4, **caractérisé en ce que** la seconde loi de passage est abandonnée lorsque l'effort résistant ($F_{résistant}$) est supérieur à un second seuil (S2).

6. Procédé d'adaptation selon la revendication 5, **caractérisé en ce que** le second seuil (S2) est supérieur au premier seuil (S1), et indépendant du temps de freinage (t).

7. Procédé d'adaptation selon l'une des revendications 2 à 6, **caractérisé en ce que** l'effort résistant ($F_{résistant}$) est minoré en fonction du temps de freinage (t).

8. Procédé selon la revendication 7, **caractérisé en ce que** l'effort résistant ($F_{résistant}$) est égal à la différence entre l'accélération calculée ($\gamma_c$) et l'accélération mesurée ($\gamma_m$) du véhicule, cette différence étant minorée en situation de freinage par un terme fonction du temps de freinage (t).


**Patentansprüche**

1. Verfahren zur automatischen Anpassung eines Getriebes für ein Kraftfahrzeug an Gefällstrecken, dessen Gangwechselvorgänge von wenigstens einer ersten Vorschrift für den Gangwechsel bei Normalfahrt und von einer zweiten besonderen Vorschrift für den Gangwechsel bei Fahrten auf Gefällstrecken gesteuert werden, die ein Motorbremsmoment hervorruft, wobei das Verfahren Schritte aufweist für das Schätzen der Neigung der Strasse ausgehend von einer Berechnung des Fahrwiderstandes und einer Verwendung oder nicht der zweiten Vorschrift für den Gangwechsel als Funktion der Schätzung, **dadurch gekennzeichnet, dass** der Fahrwiderstand geschätzt wird durch Berechnung der Differenz ($\Delta\gamma$) zwischen einem berechneten Wert ($\gamma_c$) der Beschleunigung des Fahrzeuges und einem gemessenen Wert ($\gamma_m$) der Beschleunigung, wenn die Bremsen nicht betätigt werden oder wenn die Bremsen betätigt werden und dabei die gemessene Beschleunigung ($\gamma_m$) Null ist, wobei in allen anderen Fällen der Wert dieser Differenz beibehalten wird.

2. Verfahren zur Anpassung nach Anspruch 1, **dadurch gekennzeichnet, dass** die Schätzung des Fahrwiderstandes des Fahrzeuges die Bremszeit (t) berücksichtigt.

3. Verfahren zur Anpassung nach Anspruch 2, **dadurch gekennzeichnet, dass** die zweite Vorschrift für den Gangwechsel angewendet wird, wenn der Fahrwiderstand $F_{resistant}$ kleiner als ein erster Schwellwert (S1) ist

4. Verfahren zur Anpassung nach Anspruch 3, **dadurch gekennzeichnet, dass** der erste Schwellwert (S1) eine Funktion der Bremszeit (t) ist.

5. Verfahren zur Anpassung nach Anspruch 2, 3 oder 4, **dadurch gekennzeichnet, dass** die zweite Vorschrift für den Gangwechsel verworfen wird, wenn der Fahrwiderstand ($F_{resistant}$) größer als ein zweiter Schwellwert (S2) ist.

6. Verfahren zur Anpassung nach Anspruch 5, **dadurch gekennzeichnet, dass** der zweite Schwellwert (S2) größer als der erste Schwellwert (S1) und unabhängig von der Bremszeit (t) ist.

7. Verfahren zur Anpassung nach Ansprüchen 2 bis 6, **dadurch gekennzeichnet, dass** der Fahrwiderstand ($F_{resistant}$) um eine Funktion der Bremszeit (t) verringert wird.

8. Verfahren zur Anpassung nach Anspruch 7, **dadurch gekennzeichnet, dass** der Fahrwiderstand ($F_{resistant}$) gleich der Differenz zwischen der berechneten Beschleunigung ($\gamma_c$) und der gemessenen Beschleunigung ($\gamma_m$) des Fahrzeuges ist, wobei diese Differenz bei auftretenden Bremsvorgängen durch einen Wert verringert wird, der eine Funktion der Bremszeit (t) ist.

**Claims**

1. Method for automatic adaptation to a descent situation of a vehicle gearbox, the gear changes of which are controlled by at least one rule for changing gear in a normal travelling situation and a second rule for changing gear specific to the situation of descent that causes engine braking, this method comprising steps consisting of estimating the slope of the road from a calculation of the tractive resistance and of adopting or not adopting the second rule for changing gear according to this estimate, **characterised in that** the tractive resistance is estimated by calculating the difference ($\Delta\gamma$) between a calculated acceleration value ($\gamma_c$) of the vehicle and a measured acceleration value ($\gamma_m$) when the brakes are not activated, or when the brakes are activated and the measured acceleration ($\gamma_m$) is zero, and by freezing the value of this difference in all other cases.

2. Method of adaptation according to claim 1, **characterised in that** estimation of the tractive resistance of the vehicle takes into account braking time (t).

3. Method of adaptation according to claim 2, **characterised in that** the second rule for changing gear is adopted when the tractive resistance ($F_{resistance}$) is lower than a first threshold (S1).

4. Method of adaptation according to claim 3, **characterised in that** the first threshold (S1) is a function of the braking time (t).

5. Method of adaptation according to claim 2, 3 or 4, **characterised in that** the second rule for changing gear is abandoned when the tractive resistance ($F_{resistance}$) is greater than a second threshold (S2).

6. Method of adaptation according to claim 5, **characterised in that** the second threshold (S2) is greater than the first threshold (S1), and independent of the braking time (t).

7. Method of adaptation according to one of claims 2 to 6, **characterised in that** the tractive resistance ($F_{resistance}$) is reduced according to the braking time (t).

8. Method of adaptation according to claim 7, **characterised in that** the tractive resistance ($F_{resistance}$) is equal to the difference between the calculated acceleration ($\gamma_c$) and the measured acceleration ($\gamma_m$) of the vehicle, this difference being reduced in a braking situation by a term that is a function of the braking time (t).

$$\gamma_m = \frac{d\,V veh}{dt}\qquad \underline{1}$$

Calcul $\gamma_c$      $\underline{3}$

F = 0
ou F = 1 et $|\gamma_m| < \gamma seuil$    $\underline{2}$

Calcul
$\Delta\gamma = \gamma_c - \gamma_m$    $\underline{4}$

Calcul
Frésistant = $\Delta\gamma \cdot f(t)$    $\underline{5}$

Comparaison
Frésistant à $\delta_1$    $\underline{6}$

Frésistant $< S1$

Frésistant $> S1$

adoption
loi de descente    $\underline{7}$

maintien loi de
roulage normal

Comparaison
Frésistant à S2    $\underline{8}$

Frésistant $< S2$

Frésistant $> S2$

maintien
loi de descente

retour loi
de roulage normal    $\underline{9}$